# EUROPEAN PATENT SPECIFICATION

(11) **EP 0 881 751 B1**
(45) Date of publication and mention of the grant of the patent: **23.02.2005**
(21) Application number: 98109574.8
(22) Date of filing: 26.05.1998
(51) Int. Cl.: H02K 3/24, H02K 9/06, H02K 3/12, H02K 3/28, H02K 19/22

(54) **Stator cooling arrangement of alternator for vehicle**
Anordnung für die Kühlung des Stators eines Wechselstromgenerators für Kraftfahrzeuge
Système de refroidissement pour stator d'alternateur pour véhicule

(30) Priority: 26.05.1997 WO PCT/JP97/01778; 22.09.1997 WO PCT/JP97/03374; 26.09.1997 JP 27975097; 26.09.1997 JP 27975197; 26.09.1997 JP 27975297; 14.10.1997 JP 29788297; 24.10.1997 JP 30973197; 10.12.1997 JP 36206397; 10.02.1998 JP 4439098; 13.02.1998 JP 4903998; 13.02.1998 JP 4904098; 26.02.1998 JP 6468498
(43) Date of publication of application: 02.12.1998
(73) Proprietor: Denso Corporation, Kariya-city, Aichi-pref., 448-8661 (JP)
(72) Inventor: Umeda, Atsushi, Kariya-city, Aichi-pref. 448-8661 (JP); Shiga, Tsutomu, Kariya-city, Aichi-pref. 448-8661 (JP); Kusase, Shin, Kariya-city, Aichi-pref. 448-8661 (JP)
(74) Representative: Winter, Brandl, Fürniss, Hübner, Röss, Kaiser, Polte Partnerschaft

(56) References cited:
- WO-A-92/06527
- GB-A- 1 388 512
- US-A- 1 822 261
- US-A- 1 826 295
- PATENT ABSTRACTS OF JAPAN vol. 095, no. 005, 30 June 1995 -& JP 07 046795 A (NIPPONDENSO CO LTD), 14 February 1995
- PATENT ABSTRACTS OF JAPAN vol. 018, no. 414 (E-1587), 3 August 1994 -& JP 06 121497 A (TOSHIBA CORP), 28 April 1994

## Description

### BACKGROUND OF THE INVENTION

### 1. Field of the Invention

The present invention relates to an alternator driven by an internal combustion engine which is mounted in a vehicle such as a passenger car, a truck, or boat.

### 2. Description of the Related Art

It is necessary for an alternator for a vehicle to cool the stator winding, which is a heat source, effectively. JP-A-56-98358 discloses an alternator having a cooling fan inside a frame for sending cooling air directly to the coil ends (hereinafter referred to as the inner fan type) and flat coil ends with increased surfaces to be cooled.

On the other hand, WO92/06527 discloses a stator winding, which is composed of a plurality of conductor segments connected one another. The above stator winding has gaps between the conductor segments and more regular pattern of winding than a stator winding composed of a continuously wound wire. Because of the gaps between the coil ends, cooling air can be introduced around the conductor segments easily.

In the inner fan type alternator disclosed in JP-A-56-98358, cooling air is introduced only to the inner side of the coil ends and not to the outer side of the coil ends. In order to provide a reliable performance, an alternator must have expensive conductors coated with heat resistive insulation material. Flat coil ends increase resistance of the air flow, and cooling air is not sufficient to cool the alternator that generates high output power.

In the inner fan type alternator for a vehicle, hot air which has cooled the coil ends is discharged from discharge windows formed in the outer wall of the frame. The temperature of the discharged air becomes higher as the output power of the alternator increases. This affects various parts disposed outside the alternator and can not be ignored in view of the vehicle reliability.

In particular, the non-metal belt on the drive pulley, which is disposed near some of the discharging windows, may be deteriorated by the hot air in a shorter period of time. If the belt deteriorates and breaks, the alternator and various engine accessories driven by the belt stop, causing serious problems.

It is preferable to discharge the hot air from the side opposite to air intake windows in order to cool the coil ends effectively. The above described inner fan type alternator does not have this structure.

In the alternator disclosed in WO92/06527, cooling air is introduced to the conductors disposed at the outer side of the coil ends. Since the discharging direction of the hot air is not taken into consideration in the above prior arts, the non-metal belt on the pulley may be deteriorated.

Japanese Patent No 06 121 497 discloses an electrical apparatus which could be an alternator including a stator having a stator core and a stator winding and a rotor disposed opposite to that stator. The rotor is provided with fins for sending cooling medium across said stator winding. The stator winding comprises a conductor group disposed in said stator core and a pair of annular coil-end groups respectively extending from said conductor group to be disposed on opposite sides of said stator core. Each of said conductor groups comprises a plurality of conductor portions and each of said coil-end groups comprises a plurality of coil ends disposed at one end of said stator core. Each one of said coil ends has a pair of inclined portions, whereas each one of said inclined portions is disposed at the outermost circumference of one of said coil-end groups and is inclined to guide said cooling medium spirally in one way axial direction.

### SUMMARY OF THE INVENTION

In view of the above problems, a main object of the present invention is to provide a new and improved alternator for a vehicle.

Another object of the present invention is to provide an alternator for a vehicle that prevents the heat problem of various parts, particularly, belt which are disposed outside the alternator to be exposed to the hot air.

A further object of the present invention is to reduce noises

Another object of the present invention is to provide an alternator in which the outer side of the coil ends can be cooled effectively and the discharge direction of the cooling air can be controlled by a combination of the coil ends and the rotor.

According to a main feature of the invention, a plurality of conductors disposed at the outermost circumference of the coil-end group of the stator winding incline so as to guide cooling air spirally in one-way axial direction.

### BRIEF DESCRIPTION OF THE DRAWINGS

Other objects, features and characteristics of the present invention as well as the functions of related parts of the present invention will become clear from a study of the following detailed description, the appended claims and the drawings. In the drawings:
Fig. 1 is a cross-sectional view of a main portion of an alternator for a vehicle according to a first embodiment of the present invention;
Fig. 2 is a outside view of a stator according to the first embodiment;
Fig. 3 is a perspective view of a conductor segment according to the first embodiment;
Fig. 4 is a fragmentary sectional view of the stator according to the first embodiment;
Fig. 5 is a perspective view of coil ends at opposite ends of the stator according to the first embodiment;
Fig. 6 is a winding diagram of a stator winding according to the first embodiment from first to 48-th slots;
Fig. 7 is a winding diagram of the stator according to the first embodiment from 49-th to 96-th slots;
Fig. 8 is a circuit diagram of the alternator according to the first embodiment;
Fig. 9 is a front view of a fan of a rotor according to the first embodiment;
Fig. 10 is a front view of the other fan of the rotor according to the first embodiment;
Fig. 11 is a fragmentary view of a stator according to another embodiment;
Fig. 12 is a fragmentary perspective view of the stator of another embodiment; and
Fig. 13 is a cross-sectional view of a main portion of an alternator for a vehicle according to another embodiment.

### DETAILED DESCRIPTION OF THE PREFERRED EMBODIMENTS

### (First Embodiment)

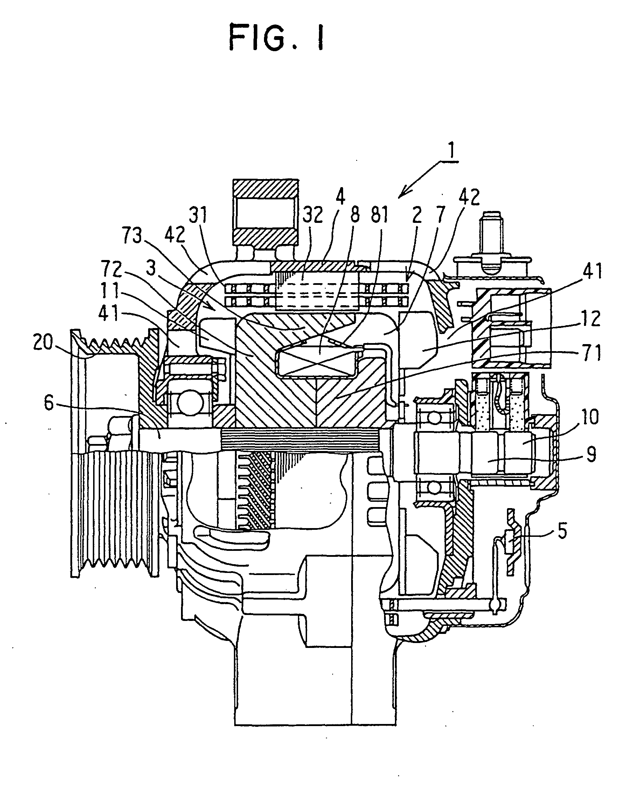

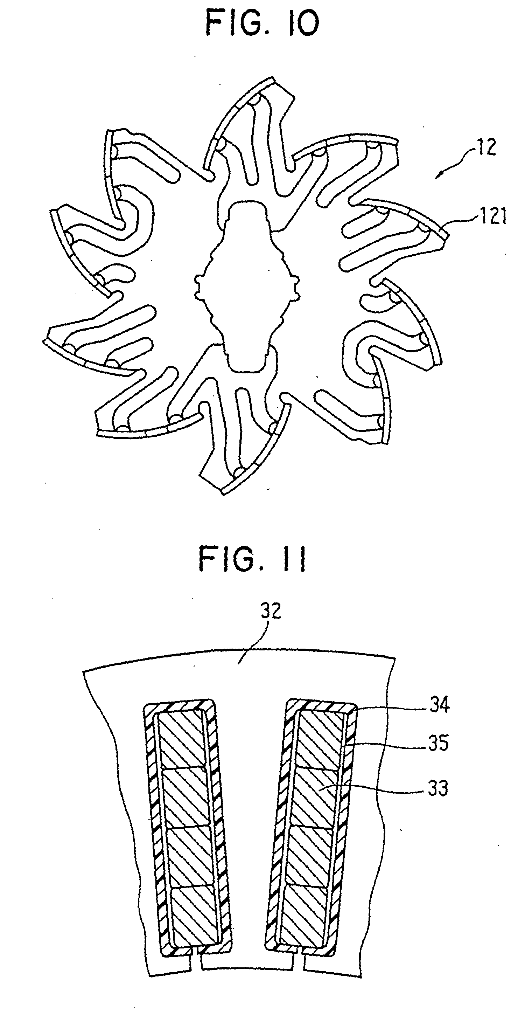

An alternator for a vehicle according to a first embodiment of the present invention is described with reference to Figs. 1-10.

Alternator 1 is composed of stator 2, rotor 3, frame 4 for supporting stator 2 and rotor 3 and rectifier 5 for converting ac power to dc power.

Rotor 3 rotates with shaft 6 and is composed of Lundell type pole core 7, field coil 8, slip rings 9, 10 and mixed-flow-type fan 11 and centrifugal fan 12. Shaft 6 is connected with pulley 20 and driven by a vehicle driving engine (not shown).

Pole core 7 is composed of a pair of pole core members. Each of the pole core members is composed of boss portion 71 fitted to shaft 6, disk portion 72 extending radially from boss portion 71 and a plurality of claw poles 73. Field coil 8 is fitted to the inner periphery of claw poles 73 via insulation sheet 81. Insulation sheet 81 is composed of a sheet impregnated with insulation resin, which is heated and bonded to field coil 8 to insulate field coil 8 from pole core 7.

Frame 4 has air discharge windows 42 at portions opposite coil ends 31 of stator 2 and air intake windows 41 at the ends thereof.

Stator 2 is composed of stator core 32, conductor segments 33 forming the stator winding and insulator 34 for insulating conductor segments 33 from stator core 32, and is supported by frame 4. Stator core 32 is composed of laminated steel sheets and has a plurality of slots 35 at the inner periphery thereof.

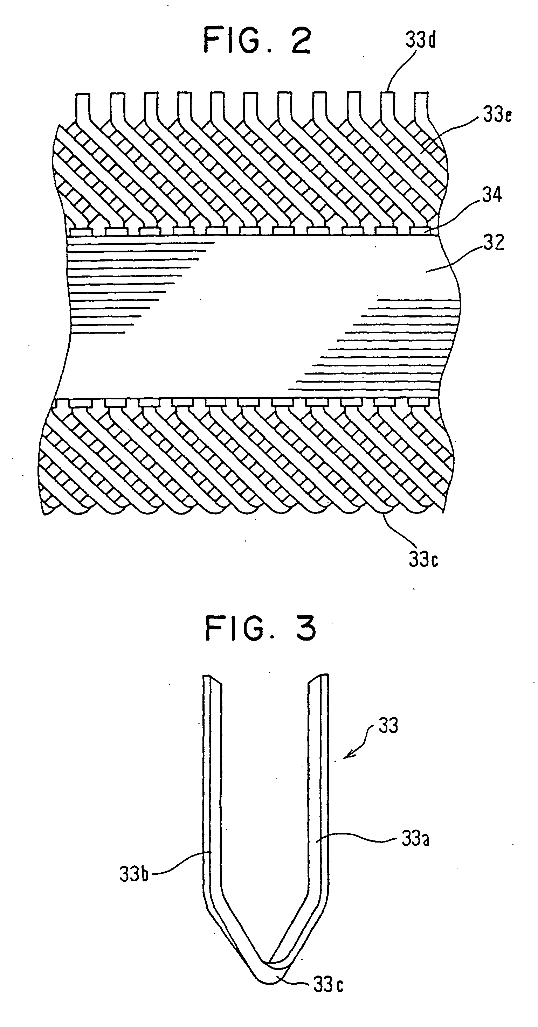

Two conductors having rectangular cross-section are inserted into each of slots 35, and the stator winding is composed of a plurality of conductor segments 33, illustrated in Fig. 3, connected to one another. The shape of the cross-section of the conductor is a rectangle having the longer sides in the radial direction than the sides in the circumferencial direction.

As shown in Fig. 2, U-turn portions 33c are disposed on one axial end of stator core 32, and joint portions 33d are disposed on the other end thereof. Inclined portions of the coil ends 31 of conductor segments 33 in the outer layer are inclined oppositely to the inclined portions thereof in the inner layer. The inclination angle is the same in the same layer. Insulation coating is not always necessary for conductor segments 33.

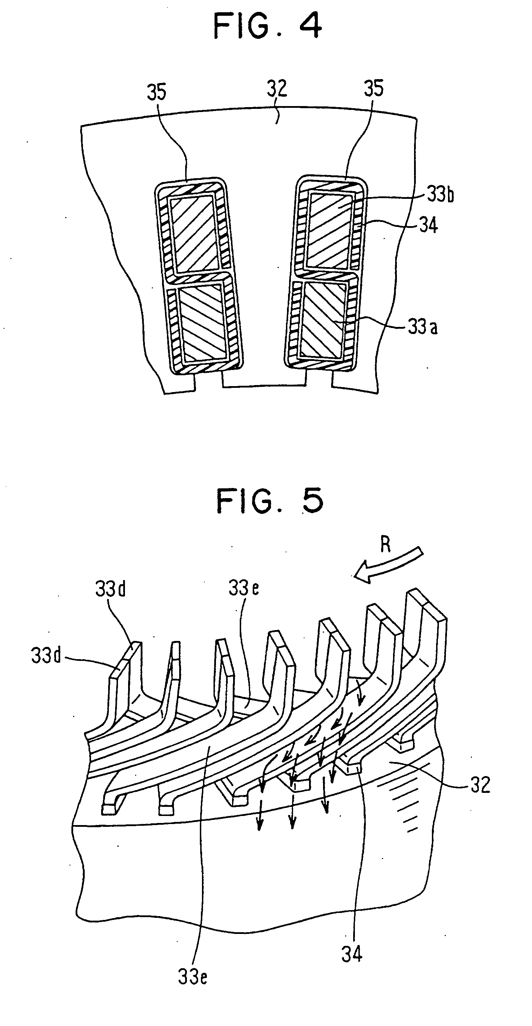

Manufacturing of the stator winding is as follows. Each of U-shaped conductor segments 33 is composed of conductor portion 33b in the outer layer, conductor portion 33a in the inner layer and U-turn portion 33c. U-shaped conductor segments are placed so that U-turn portions 33c are disposed on the same axial end of stator core 32. As shown in Fig. 4, conductor portions 33b in the outer layer are inserted into the rear side of the slots, and conductor portions 33a in the inner layer are inserted into the front side of the slot. Each of conductor segment 33 is formed from a copper plate, which is bent and shaped into a U-shape by a press machine or the like. Each of the conductor portions is press-fitted between parallel side walls of the outer layer or inner layer of corresponding slots via insulator 34. As shown in Fig. 5, end portions 33d formed opposite coil end 31 formed by U-turn portion 33c are bent outward in the circumference from each other.

In this embodiment, the rotor has 16 poles, and stator core 32 has 96 slots. Conductor segments 33 are connected to form a three-phase winding.

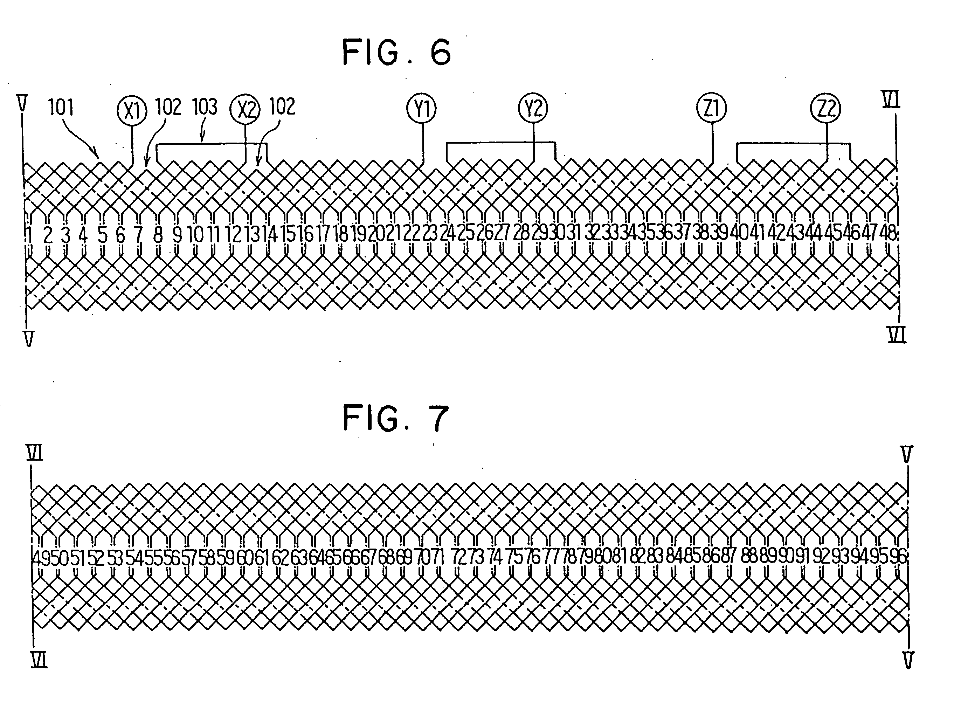

Figs. 6, 7 and 8 illustrate an example of the winding. Solid lines represent conductors disposed in the outer layer, and one-dot chain lines represent conductors disposed in the inner layer.

Firstly, an X-phase winding is described hereafter. The slots numbered with 4, 10, 16 and the every successive sixth slot to the slot numbered with 94 form a first slot group. The slots numbered with 5, 11, and 17 and the every successive sixth slot to the slots numbered with 95 form a second slot group. A first winding starting from terminal X1 is formed in the first slot group and connected in series to a second winding by one of joint portions 102 as shown in Fig. 6. The second winding is turned over by conductor portion 103 disposed in the same layer so that the conductors of the same phase winding disposed in the same slot can be connected in series. The second winding is also connected in series with the first winding ending at terminal X2 by the other of joint portions 102.

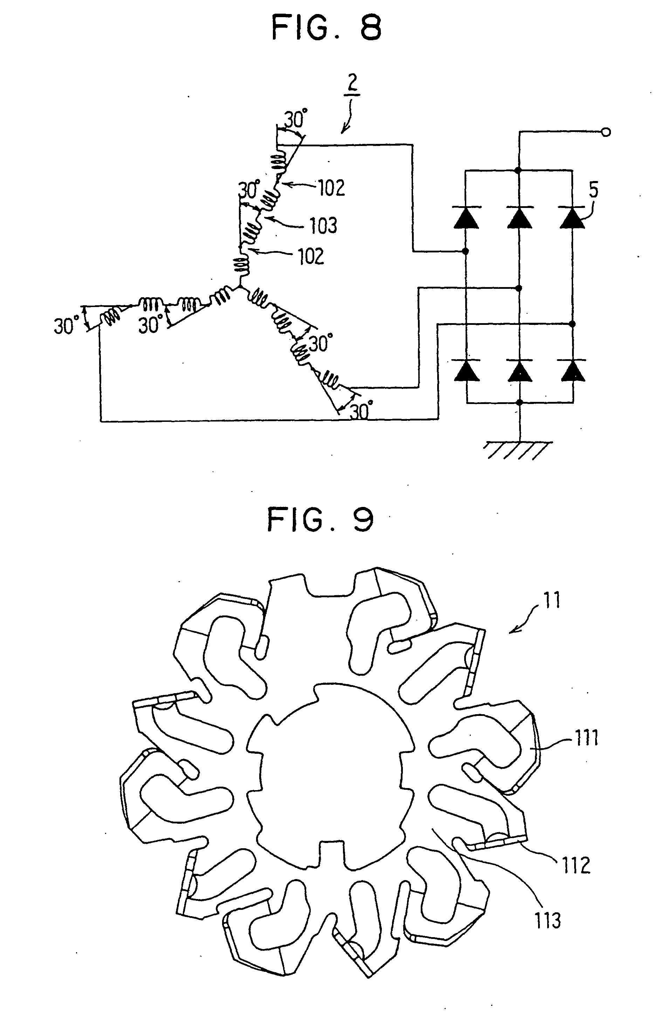

Thus, the X-phase winding is composed of a pair of series-connected stator windings whose phase angle are 30° in electric-angle different from each other. Y-phase and Z-phase windings are also composed of stator windings in the same manner and disposed, respectively, in the stator core at 120° pitch in electric angle, thereby forming a three-phase star-winding shown in Fig. 8.

Pulley-side cooling fan 11 has a plurality of blades 111 slanting to base plate 113 and a plurality of blades 112 perpendicular to base plate 113 as shown in Fig. 9. A plurality of blades 111 are slanted at an acute angle to base plate 112 against the rotating direction R. Base plate 113 is welded to the end surface of pole core 7 to be rotatable with rotor 3. Counter-pulley-side cooling fan 12 has a plurality of perpendicular blades 121 and no other blades.

Fig. 5 is a perspective view illustrating inclined conductors of coil ends 31 disposed on the inner circumference and the rotating direction R of rotor 3. Viewing from the side of pulley 20, rotor 3 rotates clockwise.

With the above-described structure, inclined portions 33e of coil ends 31 incline in the same direction in the same layer, so that a plurality of the stator windings can be disposed without interference with one another. Accordingly, regular continuous patterns are formed in the inner circumference of the coil ends 31 instead of substantially uneven portions. Because the conductors on the inner circumference of coil ends 31 incline in the same direction at opposite ends of stator core 32, cooling air flows along the same direction without obstruction. Therefore, it is possible to increase the cooling effect of the stator winding very much, thereby increasing the output power of the alternator.

As shown in Fig. 5, an annularly-disposed conductors of the outer circumference of coil ends 31 incline along the cooling air flow in the forward rotating direction R of rotor 3. The cooling air, which is driven by fan 11 to flow along the inner side of coil ends in one-way axial direction, is also drawn by the rotation of rotor 3 to include a component of the rotating direction R. Thus, the cooling air flows in a spiral or whirl. In other words, the inclined portions of coil ends 31 guide the component of the cooling air to flow in the axial direction more effectively as indicated by arrows in Fig. 5.

In the outermost circumference of the coil ends 31, if the inclined portions of conductor segments 33 incline in the direction opposite to the intake-air direction and in rotating direction R of rotor, the spiral flow of the cooling air that includes the component of the rotating direction R can be made opposite to the above. Thus, the discharging direction of the cooling air can be controlled by the inclined portions of the outermost circumference of the coil ends 31. Therefore, the hot discharge air can be put away from various parts disposed outside the alternator such as the belt on pulley 20.

If the inclined portions of the outermost circumference of the coil ends 31 at the counter pulley side incline in the same direction as the inclined portions of the outermost circumference of the coil ends 31 at the pulley side, the cooling air can be discharged more effectively.

Mixed flow type cooling fan 11 on the side of pulley 20 has a plurality of slanted blades 111. When rotor 3 rotates in direction R in Fig. 9, blade 111 drives the cooling air in the axial direction as well as in the radial direction. Thus, the strong cooling air in the rotating direction can be supplied along the inner circumference of coil ends 31 without obstructing the air flow in the axial direction. As a result, the cooling air in the axial direction is increased to increase the cooling effect and the output power.

The cooling air is taken in from the side of the pulley 20 where ambient temperature is lower, and the temperature of the axial flow can be lowered so that field coil 8 can be cooled effectively.

The number of slots is six times as many as the number of the poles of rotor 3, and the conductors in the adjacent slots 35 are connected in series. Thus, the output power at a low speed can be increased with the feature of the two turn structure.

The following structure is also available in stead of the above-described structure.

Two coil ends 31 are formed from joint portions 33d if S-shaped segments, each of which corresponds to a half portion of the U-shaped segment shown in Fig. 3, are used instead of U-shaped segment. The joint portions of the two segments are substituted for U-turn portion 33c.

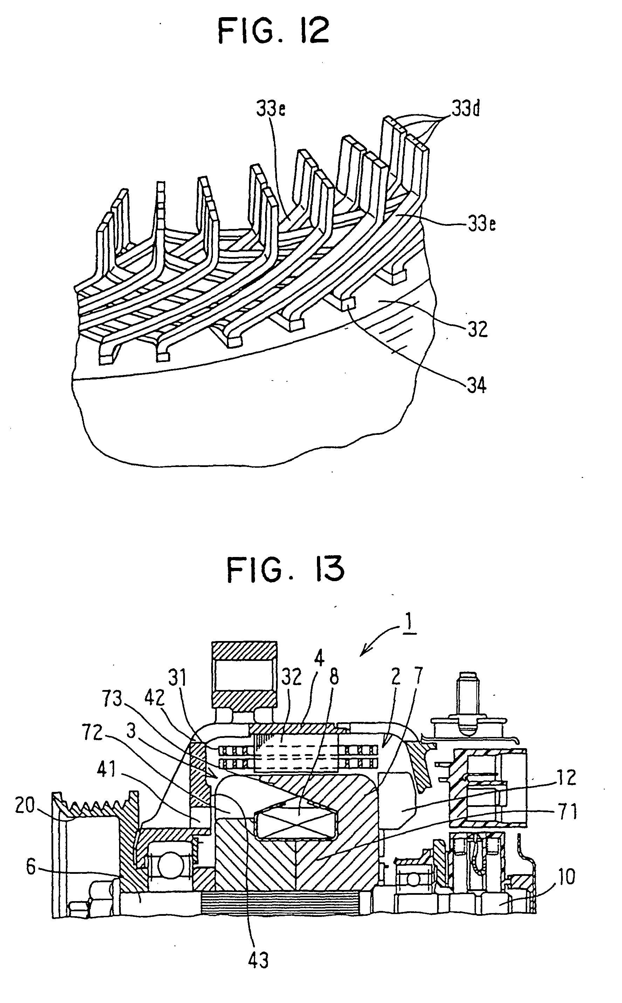

It is possible to insert two or more conductors in each of slots 35. In other words, four or more conductors can be inserted into each of slots 35 to increase the number of turns of the stator winding. As shown in Fig. 11 four conductors 33 are inserted into each of slots 35 to align in the radial direction. In Fig. 11, conductors 33 covered with insulation coating are inserted, and an insulation sheet is disposed between a bundle of conductors 33 and the wall of slot 35. Joint portions of this structure are shown in Fig. 12. Each of four conductors in each slot 35 extends oppositely from each other in the circumferential direction. The end portions of conductors in one slot are connected to the end portions of connectors in other slots. As shown in Fig. 12, the innermost conductors are connected to the conductors in the second layer, and the conductors in the third layer are connected to the conductors in the outermost conductors. Accordingly, a plurality of joint portions 33d are disposed annularly in two layers, inner layer and outer layer. In other words, a plurality of joint portions 33d are spaced apart from one another in both circumferential direction and radial direction. In this structure, the incline direction of the conductors, rotating direction R of rotor 3 and axial component of the cooling air flow in the coil-end groups are arranged so that the conductors in the outermost circumference can be inclined in the forward direction with respect to the axial direction and the rotating direction R. The layer second therefrom can be also inclined in the forward direction with respect to the axial direction and the rotating direction R.

In order to provide gaps between the conductor segments 33 at the coil ends 31 thereof, it is preferable to align the conductors in slots 35 in the radial direction. The conductors can be disposed in the slot circumferentially also. For example, four conductors can be disposed side by side in two layers to form a square.

Bare conductors, conductors having square or elliptic cross-section can be used also. In order to let the cooling air to flow easily, it is preferable to select the shape of the cross-section of the conductors and disposition thereof in the inner circumference of the coil-end groups.

Because the side walls of the disk portions 72 of pole core 7 function as centrifugal fan blades, one or both cooling fans 11, 12 can be omitted if temperature rise is not so high.

As shown in Fig. 13, the pulley-side end of rotor without fan 11 can be disposed close to the pulley-side inner wall 43 of frame 4 around intake windows 41. Thus, inner wall 43 functions as a fan shroud to increase the fan effect of the disk portions 72 of the pole core, thereby increasing the axial air flow. Thus, the cooling effect of the field coil can be increased without increasing the number of parts and work time.

If the ambient temperature around the pulley 20 is comparatively high, cooling fan 12 disposed at the side opposite pulley 20 can be provided with fan blades for driving cooling air axially inside and also inclined portions of the conductor segments 33 of the inner circumference of coil ends 31 can be extended in the opposite direction. Thus, the structure can be applied so that the cooling air is taken from the side where the ambient temperature is comparatively low according to the circumstances. That is, the rotating direction R of rotor 3 and incline direction of the coil ends are selected to supply the cooling air from the side where the ambient temperature is comparatively low. Thus, temperature of the axial cooling air flow can be lowered to cool stator 2, magnetic field coil 8 and others effectively.

In the forgoing description of the present invention, the invention has been disclosed with reference to specific embodiments thereof. It will, however, be evident that various modifications and changes may be made to the specific embodiments of the present invention without departing from the broader spirit and scope of the invention as set forth in the appended claims. Accordingly, the description of the present invention in this document is to be regarded in an illustrative, rather than restrictive, sense.

## Claims

1. An alternator for a vehicle including a stator (2) having a stator core (32) and a stator winding and a rotor (3) disposed opposite said stator (2), said alternator (1) comprising means (11) for sending cooling medium across said stator winding, wherein
said stator winding comprises a conductor group disposed in said stator core (32) and a pair of annular coil-end groups respectively extending from said conductor group to be disposed on opposite sides of said stator core (32),
each of said conductor groups comprises a plurality of conductor portions (33a, 33b) and each of said coil-end groups comprises a plurality of coil ends (31) disposed at one end of said stator core (32),
each of said coil ends (31) has a pair of inclined portions (33e), **characterised in that**
said means for sending cooling medium across said stator winding comprises means for producing an air flow which interferes with said coil ends (31) and which has a component in the rotating direction of said rotor, wherein
each one of said inclined portion (33e) disposed at the outermost circumference of one of said coil-end groups (31) has a rectangular cross-section with longer radial sides to form inclined surfaces to guide said cooling medium spirally in one-way axial direction, whereby
the inclining direction of said inclined portion from the axial end of said coil end (31) to a base thereof at an axial face of said stator (32) is the same as the rotation direction of said rotor.

2. The alternator (1) for a vehicle as claimed in claim 1, wherein
each of said inclined portions (33e) disposed at the outermost circumference of one of. said coil-end groups inclines to discharge said cooling medium spirally toward a side opposite to an air intake window (41 ).

3. The alternator (1) as claimed in claim 1 or 2, wherein said
said means (11, 12) for sending cooling medium has a plurality of fan blades disposed at an axial end of said rotor (3).

4. The alternator (1) as claimed in claim 3, wherein said blades are inclined to be acute to the axial direction of said rotor (3).

5. The alternator (1) as claimed in anyone of claims 1-4, wherein
each one of said inclined portion (33e) disposed at the outermost circumference of the other of said coil-end groups (31) inclines to guide said cooling medium spirally in one-way axial direction.

6. The alternator for a vehicle as claimed in anyone of the preceding claims wherein
said rotor comprises a plurality of claw poles and a field coil, and
said means for sending cooling medium is fixed to said rotor.

7. The alternator (1) as claimed in anyone of the preceding claims wherein
a fan having a plurality of fan blades is disposed at each axial end of said rotor (3).

8. The alternator (1) as claimed in claim 7, wherein
one of said fans disposed at the side of said pulley has blades inclining to be acute to the axis of
said rotor (3).

9. The alternator (1) as claimed in anyone of claims 1-8, wherein
a plurality of pairs of said conductors (33) is disposed in inner and outer layers in a line in the depth of each of said slots (35),
said conductors (33) have a plurality of connected portions (33d) connected with other conductors (33),
said connected portions (33d) are disposed in a plurality of rings and spaced apart from each other in said coil-end groups in the circumferential and radial directions.

10. The alternator (1) as claimed in anyone of claims 6-8, wherein
a pair of said conductors (33) is disposed in inner and outer layers in a line in the depth of each of said slots (35),
said slots (35) are disposed at 30° in electric angle, the conductors (33) in a first slot group composed of slots (35) spaced apart one slot pitch with one another are connected in series to form a first series-connected-group,
the conductors (33) in a second slot group next to said first slot group are connected in series to form a second series-connected group,
a first phase winding is composed of said first and second series-connected groups connected in series to each other.

## Patentansprüche

1. Wechselstromgenerator für ein Fahrzeug, der einen Stator (2) mit einem Statorkern (32) und einer Statorwicklung und einen Rotor (3), der gegenüber dem Stator (2) angeordnet ist, enthält und ferner eine Einrichtung (11) zum Schicken eines Kühlmediums über die Statorwicklung aufweist, wobei
die Statorwicklung eine Leitergruppe, die im Statorkern (32) angeordnet ist, und ein Paar ringförmiger Spulenendgruppen aufweist, die sich jeweils von der Leitergruppe erstrecken, so dass sie auf den gegenüberliegenden Seiten des Statorkerns (32) angeordnet sind,
jede der Leitergruppen eine Vielzahl von Leiterabschnitten (33a, 33b) und jede der Spulenendgruppen eine Vielzahl von Spulenenden (31) aufweist, welche an einem Ende des Statorkerns (32) angeordnet sind, und
jede der Spulenenden (31) ein Paar von geneigten Abschnitten (33e) hat, **dadurch gekennzeichnet, dass**
die Einrichtung zum Schicken eines Kühlmediums über die Statorwicklung eine Einrichtung zur Erzeugung eines Luftstroms aufweist, der Auswirkung auf die Spulenenden (31) und eine Komponente in Rotationsrichtung des Rotors hat, wobei
jeder der geneigten Abschnitte (33e), welche am äußersten Umfang einer der Spulenendgruppen (31) angeordnet sind, einen rechtwinkligen Querschnitt mit längeren radialen Seiten hat, wodurch geneigte Oberflächen gebildet werden, um das Kühlmedium spiralförmig in eine Einbahn-Axialrichtung zu lenken, und wobei
die Neigungsrichtung des geneigten Abschnitts von dem axialen Ende des Spulenendes (31) zu dessen Basis an einer axialen Stirnseite des Stators (32) gleich der Rotationsrichtung des Rotors ist.

2. Wechselstromgenerator (1) für ein Fahrzeug nach Anspruch 1, wobei
jeder der geneigten Abschnitte (33e), welche an dem äußersten Umfang einer jeden Spulenendgruppe angeordnet sind, derart geneigt ist, dass das Kühlmedium spiralförmig in Richtung einer einem Lufteinlassfenster (41) abgewandten Seite abzuführen.

3. Wechselstromgenerator (1) nach einem der Ansprüche 1 oder 2, wobei
die Einrichtung (11, 12) zum Schicken eines Kühlmediums eine Vielzahl von Gebläseschaufeln hat, die an einem axialen Ende des Rotos (3) angeordnet sind.

4. Wechselstromgenerator (1) nach Anspruch 3, wobei
die Schaufeln spitzwinklig zur axialen Richtung des Rotors (3) geneigt sind.

5. Wechselstromgenerator (1) nach einem der Ansprüche 1 bis 4, wobei
jeder geneigte Abschnitt (33e), der am äußersten Umfang der anderen Spulenendgruppe (31) angeordnet ist, geneigt ist, um ein Kühlmedium spiralförmig in eine Einbahn-Axialrichtung zu lenken.

6. Wechselstromgenerator (1) nach einem der Ansprüche 1 bis 5, wobei
der Rotor eine Vielzahl von Klauenpolen und eine Feldspule aufweist, und
die Einrichtung zum Schicken eines Kühlmediums am Rotor angebracht ist.

7. Wechselstromgenerator (1) nach einem der Ansprüche 1 bis 6, wobei
ein Gebläse mit einer Vielzahl von Gebläseschaufeln an jedem axialen Ende des Rotors (3) angeordnet ist.

8. Wechselstromgenerator (1) nach Anspruch 7, wobei
eines der Gebläse, welches an der Seite der Riemenscheibe angeordnet ist, Schaufeln hat, welche spitzwinklig zur Achse des Rotors (3) geneigt sind.

9. Wechselstromgenerator (1) nach einem der Ansprüche 1 bis 8, wobei
eine Vielzahl von Leiterpaaren (33) in inneren und äußeren Schichten in Tiefenrichtung eines jeden Schlitzes (35) in einer Linie angeordnet sind,
die Leiter (33) eine Vielzahl von mit anderen Leitern (33) verbundenen Verbindungsabschnitten (33d) haben, und
die Verbindungsabschnitte (33d) in einer Vielzahl von Ringen angeordnet und in den Spulenendgruppen in Umfangs- und radialer Richtung beabstandet sind.

10. Wechselstromgenerator (1) nach einem der Ansprüche 6 bis 8, wobei
ein Leiterpaar (33) in inneren und äußeren Schichten in Tiefenrichtung eines jeden Schlitzes (35) in einer Linie angeordnet ist,
die Schlitze (35) in einem elektrischen Winkel von 30° angeordnet sind, und die Leiter (33) in einer ersten Schlitzgruppe, die aus um einen Schlitzabstand voneinander beabstandeten Schlitzen (35) besteht, in Reihe geschaltet sind, um eine erste Reihenschaltungsgruppe zu bilden, und
die Leiter (33) in einer zweiten Schlitzgruppe neben der ersten Schlitzgruppe hintereinander geschaltet sind, um eine zweite Reihenschaltungsgruppe zu bilden,
eine erste Phasenwicklung aus der ersten und der zweiten Reihenschaltungsgruppe besteht, die miteinander in Reihe geschaltet sind.

## Revendications

1. Alternateur pour un véhicule incluant un stator (2) comportant un noyau de stator (32) et un enroulement de stator et un rotor (3) disposé opposé audit stator (2), ledit alternateur (1) comprenant un moyen (11) pour envoyer un milieu de refroidissement à travers ledit enroulement du stator, dans lequel
ledit enroulement du stator comprend un groupe de conducteurs disposés dans ledit noyau du stator (32) et une paire de groupe d'extrémités de bobines annulaire s'étendant respectivement depuis ledit groupe des conducteurs qui doit être disposés sur les côtés opposés dudit noyau du stator (32),
chacun desdits groupes de conducteurs comprend une pluralité de parties de conducteur (33a,33b) et chacun desdits groupes d'extrémités de bobines comprend une pluralité d'extrémités de bobines (31) disposés au niveau d'une extrémité dudit noyau du stator (32),
chacune desdites extrémités de bobines (31) comporte une paire de parties inclinées (33e), **caractérisé en ce que**
ledit moyen pour envoyer le milieu de refroidissement à travers ledit enroulement du stator comprend un moyen pour produire un écoulement d'air qui interfère avec lesdites extrémités de bobines (31) et qui comporte une composante dans la direction de rotation dudit rotor, dans lequel
chacune desdites parties inclinées (33e) disposées au niveau de la circonférence la plus à l'extérieur d'un desdits groupes d'extrémités de bobines (31) présente une section transversale rectangulaire avec des côtés radiaux plus longs pour former des surfaces inclinées pour guider ledit milieu de refroidissement en spirale dans une seule direction axiale, moyennant quoi
la direction d'inclinaison de ladite partie inclinée depuis l'extrémité axiale de ladite extrémité de bobine (31) à sa base au niveau d'une face axiale dudit stator (32) est la même que la direction de rotation dudit rotor.

2. Alternateur (1) pour un véhicule selon la revendication 1, dans lequel
chacune desdites parties inclinées (33e) disposées au niveau de la circonférence la plus à extérieur d'un desdits groupes d'extrémités de bobines s'incline pour décharger ledit milieu de refroidissement en spirale vers un côté opposé à une fenêtre d'admission d'air (41).

3. Alternateur (1) selon la revendication 1 ou 2, dans lequel
lesdits moyens (11, 12) pour envoyer le milieu de refroidissement comportent une pluralité de pales de ventilateur disposées au niveau d'une extrémité axiale dudit rotor (3).

4. Alternateur (1) selon la revendication 3, dans lequel lesdites pales sont inclinées pour faire un angle aigu dans la direction axiale dudit rotor (3).

5. Alternateur (1) selon l'une quelconque des revendications 1 a 4, dans lequel
chacune desdites parties inclinées (33e) disposées au niveau de la circonférence la plus à l'extérieur de l'autre desdits groupe d'extrémités de bobines (31) s'incline pour guider ledit milieu de refroidissement en spirale dans une seule direction axiale.

6. Alternateur pour un véhicule selon l'une quelconque des revendications précédentes dans lequel
ledit rotor comprend une pluralité de pôles à griffe et une bobine de champ, et
ledit moyen pour envoyer le milieu de refroidissement est fixé audit rotor.

7. Alternateur (1) selon l'une quelconque des revendications précédentes, dans lequel le ventilateur comportant une pluralité de pales de ventilateur est disposé à chaque extrémité axiale dudit rotor (3).

8. Alternateur (1) selon la revendication 7, dans lequel un desdits ventilateurs disposés au niveau de ladite poulie a une pale s'inclinant pour faire un angle aigu avec l'axe dudit rotor (3).

9. Alternateur (1) selon l'une quelconque des revendications 1 à 8, dans lequel
une pluralité de paires desdits conducteurs (33) sont disposés dans des couches intérieures et extérieures dans une ligne dans la profondeur de chacune desdites encoches (35),
lesdits conducteurs (33) comportent une pluralité de parties connectées (33d) connectées aux autres conducteurs (33),
lesdites parties connectées (33d) sont disposées dans une pluralité de bagues espacées les uns des autres dans ledit groupe d'extrémités de bobines dans les directions circonférentielle et radiale.

10. Alternateur (1) selon l'une quelconque des revendications 6 à 8, dans lequel
une paire desdits conducteurs (33) est disposé dans des couches intérieures et extérieures dans une ligne dans la profondeur de chacune desdites encoches (35),
lesdits encoches (35) sont disposées à un angle électrique de 30°, les conducteurs (33) dans un premier groupe d'encoches composé des encoches (35) espacées d'un pas d'encoche les unes par rapport aux autres sont connectés en série pour former un premier groupe connecté en série,
les conducteurs (33) dans un second groupe d'encoches après ledit premier groupe d'encoches sont connectés en série pour former un second groupe connecté en série,
un premier enroulement de phase est composé desdits premier et second groupes connectés en série l'un à l'autre.
